(19) Europäisches Patentamt / European Patent Office / Office européen des brevets

(11) **EP 2 745 979 B1**

(12) **EUROPEAN PATENT SPECIFICATION**

(45) Date of publication and mention
of the grant of the patent:
**29.03.2017 Bulletin 2017/13**

(21) Application number: **12823413.5**

(22) Date of filing: **17.08.2012**

(51) Int Cl.:
*B23K 9/04* (2006.01)     *B23K 35/30* (2006.01)
*C22C 38/00* (2006.01)    *C22C 38/02* (2006.01)
*C22C 38/04* (2006.01)    *C22C 38/08* (2006.01)
*C22C 38/10* (2006.01)    *C22C 38/12* (2006.01)
*C22C 38/16* (2006.01)    *C22C 38/20* (2006.01)
*C22C 38/22* (2006.01)    *C22C 38/24* (2006.01)
*C22C 38/30* (2006.01)    *C22C 38/32* (2006.01)
*C22C 38/40* (2006.01)    *C22C 38/42* (2006.01)
*C22C 38/44* (2006.01)    *C22C 38/46* (2006.01)
*B23K 101/00* (2006.01)

(86) International application number:
**PCT/JP2012/070923**

(87) International publication number:
**WO 2013/024901 (21.02.2013 Gazette 2013/08)**

(54) **MULTILAYER OVERLAY WELDING SECTION OF HIGH Cr STEEL TURBINE ROTOR AND METHOD FOR MANUFACTURING THEREOF**

MEHRSCHICHTIGER ÜBERLAGERUNGSSCHICHTSCHWEISSABSCHNITT EINES STAHLTURBINENROTORS MIT HOHEM CHROMANTEIL UND VERFAHREN ZU DESSEN HERSTELLUNG

SECTION DE SOUDAGE MULTI COUCHE DE RECOUVREMENT DE ROTOR TURBINE EN ACIER À HAUTE TENEUR EN CHROMEET SON PROCÉDÉ PERMETTANT DE FABRICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **17.08.2011 JP 2011178628**

(43) Date of publication of application:
**25.06.2014 Bulletin 2014/26**

(73) Proprietors:
• **The Japan Steel Works, Ltd.**
  **Tokyo 141-0032 (JP)**
• **Kabushiki Kaisha Kobe Seiko Sho
  (Kobe Steel, Ltd.)
  Kobe-Shi, Hyogo 651-8585 (JP)**

(72) Inventors:
• **HONMA, Yuta
  Hokkaido (JP)**
• **KAYANO, Rinzo
  Hokkaido (JP)**
• **SAKATA, Mikihiro
  Kanagawa 251-0014 (JP)**
• **YAMASHITA, Ken
  Kanagawa 251-0014 (JP)**

(74) Representative: **Grünecker Patent- und
Rechtsanwälte
PartG mbB
Leopoldstraße 4
80802 München (DE)**

(56) References cited:
JP-A- H0 481 291     JP-A- H0 966 388
JP-A- H0 966 388     JP-A- H0 966 389
JP-A- S57 165 603    JP-B2- H0 647 186
US-A- 4 504 554      US-A- 5 749 228

**Description**

TECHNICAL FIELD

The present invention relates to a multilayer overlay for forming a Cr-containing steel overlay on a surface with which bearings of a high Cr steel turbine rotor come into contact.

BACKGROUND ART

Since a high Cr steel is excellent in high-temperature strength and low-temperature toughness, the steel has been increasingly used as a material for highpressure and medium-pressure turbine rotors of generators. However, the contact surface with the bearings of the high Cr steel turbine rotor is prone to develop seizure at the bearings during its use, so that there is a concern of inviting damage. Therefore, there has been proposed a method for preventing the generation of seizure by overlay welding a low alloy steel on the bearing part of the rotor (e.g., see Patent Document 1).

Heretofore, with regard to such a kind of overlay welding, mainly welding materials and welding methods for submerge arc welding have been developed.

For example, Patent Document 2 proposes a welding material to be applied to a journal part of a turbine rotor and, in consideration of weld residual stress, discloses one using a welding material having low strength and large linear expansion coefficient as a first layer welding material as compared with a low alloy steel of an upper layer and a rotor substrate.

Moreover, in the invention described in Patent Document 3, it is intended to reduce a difference in the level of strength for the purpose of an increase in fatigue strength. Patent Document 4 discloses intention of an improvement in fatigue strength by using a welding material having a high Cr content as a first layer.

BACKGROUND ART DOCUMENT

PATENT DOCUMENT

Patent Document 1: JP-A-57-137456
Patent Document 2: JP-A-6-272503
Patent Document 3: JP-A-9-76091
Patent Document 4: JP-A-9-066388

Further high Cr steel turbine rotors comprising multilayer overlay welding structures are disclosed in US 4,504,554, US 5,749,228 and JP-B2-6-47186.

SUMMARY OF THE INVENTION

PROBLEMS THAT THE INVENTION IS TO SOLVE

However, since the welding material used in the first layer welding material described in Patent Document 2 contains no Cr, accumulation of strain occurs in the first layer at shape discontinuous parts such as a thrust part during stress relief annealing and there is a possibility of generation of defects such as cracks in some cases, depending on the strength of the upper layer.

Also, in the execution with the welding material having a Cr amount of 1.0% for the first layer defined in the invention described in Patent Document 3, there is a concern that the Cr content of the welding section decreases and further there is a concern that diffusion of C and the like occurs and the strength at the welding metal side decreases due to the difference in the Cr amount between the base material and the welding metal during the stress relief annealing after welding.

As above, in the conventional technologies, since the Cr content of the welding material which comes into contact with the rotor substrate is low and strength balance among the rotor substrate, the first layer, and the upper layer is not considered, the residual stress induced by welding is high. Also, in the shape discontinuous parts such as the thrust part at which stress concentration is prone to occur due to the shape, there is a concern of occurrence of defects. In Patent Document 4, although a welding material having a high Cr content is used for the first layer, it is supposed that stress relief annealing crack susceptibility increases through component dilution by welding depending on the components of the rotor base material, so that there is room for improvement.

Accordingly, an object of the present invention is to provide a combination of overlay welding materials for the first layer or the upper layer and a first layer or upper layer welding section obtained therefrom, and a process for producing a multilayer overlay welding section, which satisfy the strength and toughness required for a high Cr steel turbine rotor bearing part and are used for avoiding cracks during the stress relief annealing.

MEANS FOR SOLVING THE PROBLEMS

Namely, a first invention relates to a first layer welding section among a multilayer overlay welding section formed on a bearing contact surface of a high Cr steel turbine rotor, and the first layer welding section includes, in terms of % by weight: C: 0.05 to 0.2%, Si: 0.1 to 1.0%, Mn: 0.3 to 1.5%, Cr: 4.0 to 7.7%, and Mo: 0.5 to 1.5%, with a remainder including Fe and unavoidable impurities, in which the unavoidable impurities contain P: 0.015% or less, S: 0.015% or less, Cu: 0.2% or less, V: 0.2% or less, Ni: 0.3% or less, Co: 1.5% or less, B: 0.005% or less, W: 1.5% or less, and Nb: 0.07% or less in terms of % by weight based on the first layer welding section.

A second invention relates to the first layer welding section among the multilayer overlay welding section formed on the bearing contact surface of the high Cr steel turbine rotor, and in the first invention, the following expression (1) is satisfied:

$$\text{Pcr (1)} = (\text{a Cr amount in the first layer welding section}) \times 0.65 - (\text{a Cr amount of the high Cr steel turbine rotor - the Cr amount in the first layer welding section}) \times 0.35 > 0.7 \quad ... (1).$$

A third invention relates to an overlay welding material for a first layer welding section for obtaining the first layer welding section according to the first or second invention, among the multilayer overlay welding section formed on the bearing contact surface of the high Cr steel turbine rotor, and the welding material includes, in terms of % by weight: C: 0.03 to 0.2%, Si: 0.1 to 1.0%, Mn: 0.3 to 1.2%, Cr: 2.0 to 5.5%, and Mo: 0.1 to 1.5%, with a remainder including Fe and unavoidable impurities, in which the unavoidable impurities contain P: 0.015% or less, S: 0.015% or less, Cu: 0.2% or less, and V: 0.1% or less, and a sum of one or more kinds selected from the group consisting of Ni, Nb and Ti is 0.2% or less in terms of % by weight based on the overlay welding material for the first layer welding section.

A fourth invention relates to an upper layer welding section formed on the first layer welding section according to the first or second invention, among the multilayer overlay welding section formed on the bearing contact surface of the high Cr steel turbine rotor, the upper layer welding section includes, in terms of % by weight: C: 0.05 to 0.2%, Si: 0.1 to 1.0%, Mn: 0.3 to 2.5%, Cr: 1.0 to 4.0%, and Mo: 0.5 to 1.5%, with a remainder including Fe and unavoidable impurities, in which the unavoidable impurities contain P: 0.015% or less, S: 0.015% or less, Cu: 0.2% or less, V: 0.15% or less, Ni: 0.3% or less, and Nb: 0.07% or less in terms of % by weight based on the upper layer welding section.

A fifth invention relates to the upper layer welding section of the high Cr steel turbine rotor, and in the fourth invention, an amount of V contained in the upper layer welding section is smaller than an amount of V contained in the first layer welding section according to the first or second invention.

A sixth invention relates to the upper layer welding section of the high Cr steel turbine rotor, and in the fourth or fifth invention, the following expression (2) is satisfied:

$$\text{Pcr (n)} = (\text{a Cr amount in the upper layer welding section at n-th layer}) \times 0.65 - \{\text{a Cr amount in the upper layer welding section at (n-1)-th layer - the Cr amount in the upper layer welding section at the n-th layer}\} \times 0.35 > 0.7 \quad ... (2),$$

in which when N represents the number of layers constituting the multilayer overlay welding section, $2 \leq n \leq N$.

A seventh invention relates to an overlay welding material for an upper layer welding section for obtaining the upper layer welding section according to any one of the fourth to sixth inventions formed on the first layer welding section of the multilayer overlay welding section formed on the bearing contact surface of the high Cr steel turbine rotor, and the welding material includes, in terms of % by weight: C: 0.03 to 0.2%, Si: 0.1 to 1.0%, Mn: 0.3 to 3.0%, Cr: 1.0 to 2.5%, and Mo: 0.1 to 1.5%, with a remainder including Fe and unavoidable impurities, in which the unavoidable impurities contain P: 0.015% or less, S: 0.015% or less, Cu: 0.2% or less, and V: 0.1% or less, and a sum of one or more kinds selected from the group consisting of Ni, Nb and Ti is 0.2% or less in terms of % by weight based on the overlay welding material for the upper layer welding section.

A eighth invention relates to a process for producing a multilayer overlay welding section of a high Cr steel turbine rotor, the process including:

forming the first layer welding section according to the first or second invention on the bearing contact surface of the high Cr steel turbine rotor by welding using an overlay welding material for the first layer welding section including, in terms of % by weight: C: 0.03 to 0.2%, Si: 0.1 to 1.0%, Mn: 0.3 to 1.2%, Cr: 2.0 to 5.5%, and Mo: 0.1 to 1.5%, with a remainder including Fe and unavoidable impurities, in which the unavoidable impurities contain P: 0.015% or less, S: 0.015% or less, Cu: 0.2% or less, and V: 0.1% or less, and a sum of one or more kinds selected from the group consisting of Ni, Nb and Ti is 0.2% or less in terms of % by weight based on the overlay welding material for the first layer welding section, and

forming the upper layer welding section according to any one of the fourth to sixth inventions on an upper layer of the thus-formed first layer welding section by welding using an overlay welding material for the upper layer welding section including, in terms of % by weight: C: 0.03 to 0.2%, Si: 0,1 to 1.0%, Mn: 0.3 to 3.0%, Cr: 1.0 to 2.5%, and Mo: 0.1 to 1.5%, with a remainder including Fe and unavoidable impurities, in which the unavoidable impurities contain P: 0.015% or less, S: 0.015% or less, Cu: 0.2% or less, and V: 0.1% or less, and a sum of one or more kinds selected from the group consisting of Ni, Nb and Ti is 0.2% or less in terms of % by weight based on the overlay welding material for the upper layer welding section.

ADVANTAGE OF THE INVENTION

According to the upper layer welding section of the present invention, ferrite is not formed at the boundary part between the first layer and the upper layer, also it is possible to suppress stress relief annealing cracks, and bearings can be prevented from seizing with satisfying strength and toughness required for the bearing part.

Furthermore, the strength balance among the base material, the first layer, and the upper layer is made most suitable by combining the first layer welding section according to the first invention and the second invention as mentioned above with the upper layer welding section, so that the strain concentration to the first layer can be prevented during stress relief annealing. Thereby, the execution becomes possible without generating stress relief annealing cracks even for the welding of the thrust part which may develop large residual stress at welding. Also, by considering the difference in the Cr amount in each layer, an overlay-strengthened high Cr steel turbine rotor having stable quality can be provided with preventing the formation of pro-eutectoid ferrite.

BRIEF DESCRIPTION OF THE DRAWINGS

[Fig. 1] Fig. 1 is a side view showing an outline of a high Cr steel turbine rotor in the invention.

[Fig. 2] Fig. 2 is a schematic view showing an analysis portion to be measured at the time of property evaluation of inside of a first layer welding section or an upper layer welding section and a sampling position of a test piece for a high-temperature low strain rate tensile test.

[Fig. 3] Fig. 3 is a graph showing a relationship between the Cr amount and reduction of area at a high-temperature low strain rate tensile test using Cr variation materials.

[Fig. 4] Figs. 4(a) to 4(d) are schematic views showing a ring crack test piece for evaluating stress relief annealing crack susceptibility at the first layer welding section. Fig. 4(a) is a drawing showing a sampling position of the test piece for use in the test. Fig. 4(b) is a side view of the test piece. Fig. 4(c) is a front view of the test piece. Fig. 4(d) is an enlarged view of the A part in Fig. 4(c). The unit of values of the sizes in Figs. 4(a) to 4(d) is "mm".

[Fig. 5] Fig. 5 is a schematic view showing a step of imparting tensile residual stress to a U notch bottom part at the time of conducting the ring crack test.

[Fig. 6] Fig. 6 is a schematic view showing the shape of the test piece for a high-temperature low strain rate tensile test. The unit of values of the sizes in Fig. 6 is "mm".

MODE FOR CARRYING OUT THE INVENTION

The following will describe embodiments of the present invention in detail but the invention is not limited thereto and can be implemented in any variations.

<First layer welding section>

The components of the first layer welding section according to the invention contain C: 0.05 to 0.2%, Si: 0.1 to 1.0%, Mn: 0.3 to 1.5%, Cr: 4.0 to 7.7%, and Mo: 0.5 to 1.5% in terms of % by weight and a remainder includes Fe and unavoidable impurities. The following will describe the meanings of these components and, when the first layer welding section has the above-mentioned composition, a difference in the level of strength among the base material and the overlay first layer or subsequent overlay layers can be suppressed to a degree at which problems do not practically arise and thus stress relief annealing cracks in the first layer can be suppressed. The contents in the following are all shown in terms of % by weight.

C: 0.05 to 0.2%

Since C is a necessary additive element from the viewpoint of securing the tensile strength of the welding section, a lower limit thereof is set to 0.05%. On the other hand, in view of a decrease in an impact value and an increase in weld crack susceptibility, an upper limit thereof is set to 0.2%.

Si: 0.1 to 1.0%

Since Si is an element necessary as a deoxidizer or for securing strength, a lower limit thereof is set to 0.1%. However, since an excessive content of Si promotes cracks such as stress relief annealing cracks and invites a decrease in toughness, an upper limit thereof is set to 1.0%. For the same reason, the lower limit thereof is preferably set to 0.25% and the upper limit is desirably set to 0.7%.

Mn: 0.3 to 1.5%

Since Mn is an element necessary as a deoxidizer or for securing strength similarly to Si, a lower limit thereof is set to 0.3%. However, since an excessive content of Mn invites a decrease in toughness, an upper limit thereof is set to 1.5%. For the same reason, the upper limit is set to desirably 1.2%, more desirably 1.0%.

Cr: 4.0 to 7.7%

Cr is an important element for securing strength and toughness. In order to suppress the strain concentration to the first layer, suppress the difference in Cr from the base material, and prevent the formation of ferrite, a lower limit thereof is set to 4.0%. However, since an excessive content of Cr increases hardenability and enhances weld crack susceptibility, an upper limit thereof is set to 7.7%. For the same reason, the upper limit is desirably set to 6.7%.

Mo: 0.5 to 1.5%

Since Mo precipitates as a carbide during the stress relief annealing and enhances temper softening resistance, it is an important element for obtaining strength after the stress relief annealing. In order to suppress the strain concentration during the stress relief annealing, a lower limit thereof is set to 0.5%. However, since an excessive content of Mo enhances cracking ability and invites a decrease in toughness, an upper limit thereof is set to 1.5%. For the same reason, the upper limit is desirably set to 1.0%.

The essential constituting elements of the first layer welding section are as mentioned above. Also, the remainder substantially contains Fe and unavoidable impurities resulting from dilution from the base material. As the unavoidable impurities, the first layer welding section may contain P: 0.015% or less, S: 0.015% or less, Cu: 0.2% or less, V: 0.2% or less, Ni: 0.3% or less, Co: 1.5% or less, B: 0.005% or less, W: 1.5% or less, and Nb: 0.07% or less in terms of % by weight based on the whole first layer welding section. The following will describe reasons thereof.

P: 0.015% or less

P is an impurity element that mixes in from a raw material during the smelting of a metal material. Since P has a possibility of decreasing toughness, it is desirable to reduce it as far as possible. Therefore, the content of P is set to 0.015% or less.

S: 0.015% or less

Similarly to P, S is an impurity element that mixes in from a raw material during the smelting of a metal material.

Since S has a possibility of decreasing toughness, it is desirable to reduce it as far as possible. Therefore, the content of S is set to 0.015% or less.

Cu: 0.2% or less

Since Cu has a possibility of decreasing the toughness of the welding section, an upper limit of the content is set to 0.2% or less.

V: 0.2% or less

V is known as an element for increasing the temper softening resistance to obtain strength after stress relief annealing. However, from the studies of the present inventors, it has been found that V extremely elevates the stress relief annealing crack susceptibility. Therefore, the content of V is limited to 0.2%, preferably 0.1 % at most.

Ni: 0.3% or less

Since an excessive content of Ni has a possibility of causing temper embrittlement, the content of Ni is limited to 0.3% at most.

Co: 1.5% or less

In the case where the base material contains Co, the content of Co should be suppressed to an increase by dilution/fusion from the base material during welding and is limited to 1.5% at most.

B: 0.005% or less

W: 1.5% or less

Nb: 0.07% or less

These elements are generally known as elements that improve temper softening resistance during the stress relief annealing and secure room-temperature strength. However, from the studies of the present inventors, it has been found that an excessive content of each element decreases toughness and also degrades welding ability. Therefore, in the invention, as for the contents of these components, upper limits are determined to the above values, respectively.

The Cr amount contained in the first layer welding section according to the invention preferably satisfies the following expression (1):

$$\text{Pcr (1)} = (\text{Cr amount in first layer welding section}) \times 0.65 - (\text{Cr amount in high Cr steel}$$

$$\text{turbine rotor} - \text{Cr amount in first layer welding section}) \times 0.35 > 0.7 \quad ... (1)$$

With an increase in the Cr content of the first layer welding section and a decrease in the difference from the Cr amount in the high Cr steel turbine rotor, the ferrite formation during the stress relief annealing is suppressed. When the Pcr (1) value represented by the above expression (1) is a value exceeding 0.7, the ferrite formation is suppressed at the boundary between the base material and the first layer welding section and an overlay-strengthened high Cr steel turbine rotor having stable quality can be obtained. Incidentally, the Cr amounts in the above expression (1) are all represented in terms of % by weight.

<Welding material for first layer welding section>

In the welding material for obtaining the above first layer welding section, the dilution of the components occurs with the base material during the overlay welding on the base material and also the dilution of the components occurs with the upper layer to be welded thereon. The dilution of the components occurs through the fusion of a part of the neighboring layers during welding and the migration of the components from a layer having high concentration of the components to a layer having low concentration thereof. It is generally sufficient that the base material is a high Cr steel to be commonly used as a turbine rotor for thermal power generation and particularly, the material thereof is preferably 12Cr steel, more preferably one so-called new 12Cr steel in which W, Co, and B are added thereto.

With considering the aforementioned dilution, the welding material for the first layer welding section is defined for obtaining the above composition of the first layer welding section. Thereby, the action and effect of the first layer welding section can be exhibited.

By using the welding material for the first layer welding section as an overlay first layer in the high Cr rotor substrate, a difference in the level of strength between the base material and the overlay first layer or subsequent overlay layers can be suppressed to a degree at which no problem arises practically and the stress relief annealing cracks can be suppressed in the first layer. Moreover, for the welding material, by suppressing the difference in the Cr content between the base material and the first layer welding metal so that the first layer welding section satisfies the above expression (1), the formation of ferrite can be suppressed.

Specifically, the welding material for the first layer welding section according to the invention includes C: 0.03 to 0.2%, Si: 0.1 to 1.0%, Mn: 0.3 to 1.2%, Cr: 2.0 to 5.5%, and Mo: 0.1 to 1.5% in terms of % by weight, and the remainder includes Fe and unavoidable impurities. The unavoidable impurities are desirably P: 0.015% or less, S: 0.015% or less, Cu: 0.2% or less, and V: 0.1% or less, and the sum of one or more kinds selected from the group consisting of Ni, Nb, and Ti is 0.2% or less in terms of % by weight based on the welding material for the first layer welding section.

The following will specifically describe individual components.

C: 0.03 to 0.2%

The C content of the first layer welding section according to the invention ranges from 0.05 to 0.2% and there is a case where the base material component exceeds the upper limit of the C content range of the first layer welding section. In consideration of the dilution/fusion with the base material component during welding, it is desirable that a lower limit of the C content in the welding material is set to 0.03% and an upper limit thereof is set to 0.2% in view of welding workability and the like, for making the C content of the first layer welding section fall within the above range.

Si: 0.1 to 1.0%

The Si content of the first layer welding section according to the invention ranges from 0.1 to 1.0%. In consideration of the dilution/fusion with the base material component during welding, the Si content in the welding material desirably ranges from 0.1 to 1.0%, for making the Si content of the first layer welding section fall within the above range.

Mn: 0.3 to 1.2%

The Mn content of the first layer welding section according to the invention ranges from 0.3 to 1.5% and there is a case where the base material component exceeds the upper limit of the Mn content range of the first layer welding section. In consideration of the dilution/fusion with the base material component during welding, it is desirable that a lower limit of the Mn content in the welding material is 0.3% for assuring the effect as a deoxidizer and an upper limit thereof is 1.2% so as not to exceed the upper limit of the component range of the first layer welding section.

Cr: 2.0 to 5.5%

The Cr content of the first layer welding section according to the invention ranges from 4.0 to 7.7%. In consideration of the dilution/fusion with the base material component during welding, the Cr content in the welding material desirably ranges from 2.0 to 5.5% for obtaining the component range of the first layer welding section.

Mo: 0.1 to 1.5%

The Mo content of the first layer welding section according to the invention ranges from 0.5 to 1.5%. In consideration of the dilution/fusion with the base material component during welding, the Mo content in the welding material desirably ranges from 0.5 to 1.5% for obtaining the component range of the first layer welding section.

As the impurities contained in the welding material, there may be mentioned P, S, Cu, V, Ni, Nb, Ti, W, Co, B, and the like.

As the impurities of the first layer welding section defined in the invention, the following are allowed: P: 0.015% or less, S: 0.015% or less, and Cu: 0.2% or less. These are components that deteriorate mechanical properties and welding ability of both the welding section and base material and, also in the welding material for the first layer, the same component range is desirable as that of the first layer welding section.

V: 0.1% or less

V is a component contained in the base material. For obtaining the range, i.e., 0.2% or less, of the first layer welding section according to the invention, the V content in the welding material is desirably 0.1% or less in consideration of the dilution/fusion during welding.

The sum of one or more kinds selected from the group consisting of Ni, Nb, and Ti being 0.2% or less

Ni and Nb are elements contained in the base material. For obtaining Ni: 0.3% or less and Nb: 0.07% or less that are the ranges of the first layer welding section according to the invention, the contents thereof in the welding material are desirably as low as possible in consideration of the dilution/fusion during welding.

Moreover, Ti is an element that is usually hardly contained in the base material. However, since Ti increases the formation of non-metal inclusion when remains, the content thereof in the welding material is desirably as low as possible. Therefore, the sum of one or more kinds selected from the group consisting of Ni, Nb, and Ti is desirably 0.2% or less.

W, Co, and B are components contained in the base material. For obtaining W: 1.5% or less, Co: 1.5% or less, and B: 0.005% or less that are the ranges of the first layer welding section according to the invention, the contents thereof are desirably as low as possible within the ranges unavoidably contained by a usual process for producing the welding material.

<Upper layer welding section>

The components constituting the upper layer according to the invention contain C: 0.05 to 0.2%, Si: 0.1 to 1.0%, Mn: 0.3 to 2.5%, Cr: 1.0 to 4.0%, and Mo: 0.5 to 1.5% in terms of % by weight and the remainder includes Fe and unavoidable impurities.

The following will describe reasons for defining the components of the upper layer welding section of the invention. Incidentally, the contents in the following are all represented in terms of % by weight.

C: 0.05 to 0.2%

Since C is a necessary additive element for imparting a necessary strength to the bearing surface, a lower limit thereof is set to 0.05%. However, since the impact value is lowered and the weld crack susceptibility becomes high when the content thereof exceeds 0.2%, an upper limit thereof is set to 0.2%.

Si: 0.1 to 1.0%

Since Si is an element necessary as a deoxidizer or for securing strength as shown in the first layer overlay welding metal, the content thereof is limited to 0.1% at least. However, since an excessive content of Si promotes cracks such as stress relief annealing cracks and invites a decrease in toughness, an upper limit thereof is set to 1.0%. For the same reason, the lower limit is desirably set to 0.3% and the upper limit is desirably set to 0.7%.

Mn: 0.3 to 2.5%

Since Mn is an element necessary as a deoxidizer or for securing strength similarly to Si, a lower limit thereof is set to 0.3%. However, since an excessive content of Mn invites a decrease in toughness, an upper limit thereof is set to 2.5%. For the same reason, the lower limit is desirably set to 0.7% and the upper limit is desirably set to 2.0%, and further, the lower limit is more desirably set to 1.0%.

Cr: 1.0 to 4.0%

Cr is an important element for securing strength and toughness. In order to suppress the difference in Cr from the first layer and prevent the formation of ferrite, a lower limit thereof is set to 1.0%. However, since strain is concentrated to the first layer owing to too high strength when the content exceeds 4.0% and a crack may be generated in some cases during the stress relief annealing, an upper limit thereof is set to 4.0%.

Mo: 0.5 to 1.5%

Since Mo precipitates as a carbide during the stress relief annealing and enhances temper softening resistance, it is an important element for obtaining strength after the stress relief annealing. In order to suppress the strain concentration during the stress relief annealing, a lower limit thereof is set to 0.5%. However, an excessive content thereof enhances the stress relief annealing crack susceptibility and invites a decrease in toughness, an upper limit thereof is set to 1.5%.

The essential constituting elements of the upper layer welding section are as mentioned above and the remainder substantially contains Fe. However, minute amounts of unavoidable impurities such as S, P, and Ni may be further contained in the range where the above properties are not inhibited. Seizure resistance can be made excellent by using the above upper layer welding section as an upper layer in the high Cr steel turbine rotor substrate, and the formation of ferrite can be suppressed by suppressing the difference in the Cr content between the first layer and the upper layer welding section.

As the unavoidable impurities, there may be contained P: 0.015% or less, S: 0.015% or less, Cu: 0.2% or less, V: 0.15% or less, Ni: 0.3% or less, and Nb: 0.07% or less in terms of % by weight based on the upper layer welding section. The following will describe details.

P: 0.015% or less

P is an impurity element that mixes in from a raw material during the smelting of a metal material. Since P has a possibility of decreasing toughness, it is desirable to reduce it as far as possible. Therefore, the content of P is set to 0.015% or less.

S: 0.015% or less

S is also an impurity element that mixes in from a raw material during the smelting of a metal material. Since S has a possibility of decreasing toughness, it is desirable to reduce it as far as possible. Therefore, the content of S is set to 0.015% or less.

Cu: 0.2% or less

Since Cu has a possibility of decreasing the toughness of the welding section, an upper limit thereof is set to 0.2% or less.

V: 0.15% or less

V is an element for increasing the temper softening resistance to obtain strength after the stress relief annealing. On the other hand, in the case of considering that the prevention of the stress relief annealing crack is important, the content of V is limited. Since V improves the temper softening resistance, the strain concentration to the first layer occurs and thus a crack may be generated during the stress relief annealing in some cases. In order to avoid it, the V content is limited to 0.15% or less.

Incidentally, a welding material containing more than 0.15% of V may be used in combination, for example, with avoiding the stress relief annealing cracks by controlling the V content of the welding section to 0.15% or less using a welding material having a low V content as the first layer of the upper layer and with controlling the V content of the welding section of each of the second and subsequent layers or at least the product surface layer part that is the outermost surface of the upper layer to 0.15 to 0.3%. In that case, the Cr content of welding section of the product surface layer part is desirably 2.5% or less for preventing seizure. Although a mechanism between the Cr amount and the generation of seizure is not solved, it is empirically well known for one of ordinary skill in the art that a risk of the generation of seizure becomes high when the Cr amount exceeds 2.5%.

According to the present invention, the amount of V contained in the upper layer welding section is smaller than the amount of V contained in the first layer welding section from the viewpoint of no occurrence of excessive stress concentration to the first layer.

Ni: 0.3% or less

Since an excessive content of Ni has a possibility of causing temper embrittlement, the content thereof is limited to 0.3% at most.

Nb: 0.07% or less

Nb improves the temper softening resistance during the stress relief annealing and secures the room-temperature strength. However, since an excessive content thereof may decrease toughness and also degrade welding ability, an upper limit thereof is defined to be 0.07% in the invention.

The Cr amount contained in the upper layer welding section preferably satisfies the following expression (2):

$$Pcr\,(n) = (\text{Cr amount in upper layer welding section at n-th layer}) \times 0.65 -$$

$$\{\text{Cr amount of upper layer welding section at (n-1)-th layer - Cr amount of upper layer}$$

$$\text{welding section at n-th layer}\} \times 0.35 > 0.7 \dots (2),$$

in which when N represents the number of layers constituting the multilayer overlay welding section, $2 \leq n \leq N$.

By controlling Pcr (n) represented by the above expression (2) to a value exceeding 0.7 with considering the difference between the Cr amount of the upper layer welding section at the n-th layer and the Cr amount of the upper layer welding section at the (n-1)-th layer, the ferrite formation at the boundaries of individual layers is suppressed. In this regard, Pcr (2) means a calculation value satisfying the expression (2) of an upper layer that is the 2nd layer (the 1 st layer of the upper layer) on the first layer welding section that is the 1 st layer. In this case, in the expression (2), the upper layer welding section at the (n-1)-th layer corresponds the first layer welding section. Incidentally, the Cr amounts in the above expression are all represented in terms of % by weight.

<Overlay welding material for upper layer welding section>

With considering composition variation by the occurrence of dilution of the components with the first layer welding section during the overlay welding on the first layer welding section, the overlay welding material for obtaining the above upper layer welding section is defined for obtaining the above composition of the upper layer welding section. By the welding using the overlay welding material, the above upper layer welding section can be obtained, and the action and effect of satisfying strength and toughness and avoiding cracks during the stress relief annealing can be exhibited.

Specifically, the overlay welding material for the upper layer welding section contains C: 0.03 to 0.2%, Si: 0.1 to 1.0%, Mn: 0.3 to 3.0%, Cr: 1.0 to 2.5%, and Mo: 0.1 to 1.5% in terms of % by weight, with the remainder including Fe and unavoidable impurities. The unavoidable impurities desirably contains P: 0.015% or less, S: 0.015% or less, Cu: 0.2% or less, and V: 0.1% or less, and the sum of one or more kinds selected from the group consisting of Ni, Nb, and Ti is 0.2% or less in terms of % by weight based on the overlay welding material for the upper layer welding section.

The following will specifically describe the above components.

C: 0.03 to 0.2%

The C content of the upper layer welding section according to the invention ranges from 0.05 to 0.2%. In consideration of the dilution/fusion with C contained in the first layer welding section according to the invention, it is desirable that a lower limit of the C content in the welding material is set to 0.03% and an upper limit thereof is set to 0.2% in view of welding workability, in order not to exceed the upper limit of the C component range of the upper layer welding section.

Si: 0.1 to 1.0%

The Si content of the upper layer welding section according to the invention ranges from 0,1 to 1.0%. In consideration of the dilution/fusion with Si contained in the first layer welding section according to the invention, the Si content in the welding material desirably ranges from 0.1 to 1.0% for obtaining the Si component range of the upper layer welding section.

Mn: 0.3 to 3.0%

The Mn content of the upper layer welding section according to the invention ranges from 0.3 to 2.5%. In consideration of the dilution/fusion with Mn contained in the first layer welding section according to the invention, the Mn content in the welding material is desirably ranges from 0.3% to 3.0% for obtaining the Mn component range of the upper layer welding section.

Cr: 1.0 to 2.5%

The Cr content of the upper layer welding section according to the invention ranges from 1.0 to 4.0%. In consideration of the dilution/fusion with Cr contained in the first layer welding section according to the invention, a lower limit of the Cr content in the welding material is desirably 1.0% so as not to be lower than the lower limit of the Cr content of the upper layer welding section. An upper limit thereof is desirably 2.5% so as not to exceed the upper limit of the Cr content of the upper layer welding section.

Moreover, the Cr content of the upper layer welding section as the product surface layer part that is the outermost surface of the upper layer is also desirably 2.5% or less for preventing seizure. Similarly, an upper limit of the overlay welding material for the upper layer welding section as the product surface layer part is also desirably 2.5%.

Mo: 0.1 to 1.5%

The Mo content of the upper layer welding section according to the invention ranges from 0.5 to 1.5%. In consideration of the dilution/fusion with Mo contained in the first layer welding section according to the invention, the Mo content in the welding material desirably ranges from 0.1 to 1.5% for obtaining the component range of the upper layer welding section.

Unavoidable impurities: P, S, Cu, V, Ni, Nb, Ti, W, Co, B

As the impurities contained in the upper layer overlay welding material according to the invention, the following are allowed: P: 0.015% or less, S: 0.015% or less, and Cu: 0.2% or less in terms of % by weight based on the overlay welding material for the upper layer welding section. These are components deteriorating mechanical properties and welding ability, and the same component ranges are desirable as those of the upper layer welding section according to the invention.

V: 0.1% or less

As for V, 0.2% or less of V are contained in the first layer welding section by the dilution/fusion from the base material. Therefore, for obtaining 0.15% or less as the range of the V content of the upper layer welding section according to the invention, the V content in the welding material is desirably 0.1% or less in consideration of the dilution/fusion during binding.

The sum of one or more kinds selected from the group consisting of Ni, Nb, and Ti being 0.2% or less

Ni and Nb are elements that may be contained in the base material. For obtaining Ni: 0.3% or less and Nb: 0.07% or less that are the ranges of the upper layer welding section defined in the invention, the contents thereof in the welding material are desirably as low as possible.

Moreover, Ti is usually hardly contained in the base material but, since Ti increases the formation of non-metal inclusion when remains in the welding section, the content in the welding material is also desirably as low as possible. Therefore, the sum of one or more kinds selected from the group consisting of Ni, Nb, and Ti is desirably 0.2% or less.

W, Co, and B may be contained in the ranges of W: 1.5% or less, Co: 1.5% or less, and B: 0.005% or less in the first layer welding section by the dilution/fusion from the base material. However, the upper layer welding section does not necessarily contain these components and, in view of costs, it is sufficient that the contents fall within the ranges unavoidably contained by a usual process for producing the welding material.

With regard to the composition of the welding section, since the material to be welded is generally melted to a degree of 20 to 40% and is diluted/fused with the welding material during welding, the elemental composition of the welding material may be determined with taking the dilution/fusion into account.

<High Cr steel turbine rotor>

In the invention of the present application, a high Cr steel turbine rotor is a target of the overlay welding. The high Cr steel turbine rotor is constituted by a high Cr steel and, for example, a steel containing 8 to 13% of Cr is exemplified. The composition of the turbine rotor in the invention is not limited to specific one and a high Cr steel capable of being used as the turbine rotor is sufficient.

The following will exemplify a typical turbine rotor composition (% by weight).

C: 0.05 to 0.25%,

Si: 1.0% or less,
Mn: 1.5% or less,
Ni: 1.0% or less,
Cr: 8 to 13%,
Mo: 2.0% or less,
V: 0.05 to 0.4%,
Nb: 0.01 to 0.1%,
N: 0.01 to 0.05%,
W: 0.05 to 5.0%,
Co: 0.05 to 5.0%, and
B: 0.015% or less,

with the remainder being Fe and unavoidable impurities.

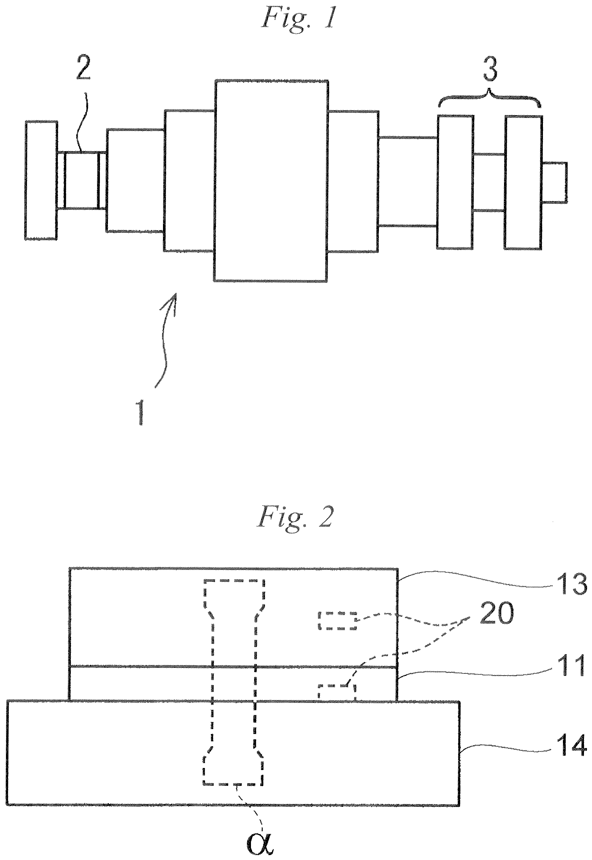

Fig. 1 is a schematic view showing a side surface of a high Cr steel turbine rotor to which the overlay welding material according to the invention is applied. For example, a steel containing 8 to 13% by weight of Cr is exemplified.

A high Cr steel turbine rotor 1 has a journal part 2 and a thrust part 3 as bearing parts, and the overlay welding section can be formed by welding to one or both of the journal part 2 and the thrust part 3 using the welding material according to the invention.

At the formation of the overlay welding section, it is desirable to form the first layer welding section according to the invention and then to form the upper layer welding section thereon using the welding material according to the invention. In the formation of the above first layer and upper layer welding sections, it is desirable to perform the welding by TIG (Tungsten Inert Gas) welding, submerge arc welding, or the like. The welding method and welding conditions in the welding are not particularly limited in the invention and a known method can be conducted under known conditions.

At the welding of an under layer, it is desirable to determine the Cr content of the first layer so as to satisfy the following expression (1).

$$\text{Pcr (1)} = (\text{Cr content in first layer welding section}) \times 0.65 - (\text{Cr content of}$$

$$\text{high Cr steel turbine rotor} - \text{Cr content in first layer welding section}) \times 0.35 > 0.7 \quad \ldots$$

$$(1)$$

Also, at the welding of overlaying, it is desirable to determine the Cr content of the upper layer so as to satisfy the following expression (2).

$$\text{Pcr (n)} = (\text{Cr content in upper layer welding section at n-th layer}) \times 0.65 -$$

$$\{\text{Cr content in upper layer welding section at (n-1)-th layer} - \text{Cr content in upper layer}$$

$$\text{welding section at n-th layer}\} \times 0.35 > 0.7 \quad \ldots (2),$$

in which when N represents the number of layers constituting the multilayer overlay welding section, $2 \leq n \leq N$.

EXAMPLES

The following will describe Examples of the invention.

Using a 12Cr rotor substrate having a component composition (the remainder being Fe and unavoidable impurities) shown in Table 1 on the supposition of a high Cr steel turbine rotor, overlay welding wires each having the component composition (the remainder being Fe and unavoidable impurities) shown in Table 2 were used as welding materials for first layer welding sections of Examples or Comparative Examples and further, overlay welding wires each having the component composition (the remainder being Fe and unavoidable impurities) shown in Table 3 were used as overlay welding materials for upper layer welding sections of Examples or Comparative Examples.

The component analysis of the rotor substrate was conducted in accordance with the prescription of JIS G 1253 (2010) after a test piece was sampled from an arbitrary portion. The component analysis of the overlay welding wires as the overlay welding materials for the first layer welding section or for the upper layer welding section was conducted in accordance with the prescription of JIS Z 3317 (2010).

Using each of the above welding materials, the first layer and the upper layer was overlay-welded by TIG welding under the welding conditions shown in Table 4. Thereafter, a test piece was sampled from the check analysis position 20 shown in Fig. 2 and the component analysis (check analysis; the remainder being Fe and unavoidable impurities) of the first layer and upper layer welding sections was conducted. The component analysis of individual welding sections was conducted in accordance with the prescription of JIS G 1253 (2010).

Furthermore, as shown by α in Fig. 2, a tensile test piece was sampled from each test piece so that the first layer welding metal became central. After the piece was held at a temperature of 660°C for 30 minutes to homogenize the temperature, which simulates a stress relief annealing process, a high-temperature low strain rate tensile test was performed at a strain rate of $6.7 \times 10^{-6}$/s. A value of reduction in area (%) was used for evaluation.

[Table 1]

| 12Cr rotor substrate composition (% by weight) | | | | | | | | | | | | | | |
|---|---|---|---|---|---|---|---|---|---|---|---|---|---|---|
| C | Si | Mn | P | S | Ni | Cr | Cu | Mo | V | Nb | N | W | Co | B |
| 0.10 | 0.07 | 0.08 | 0.010 | 0.0014 | 0.22 | 9.71 | 0.03 | 0.60 | 0.20 | 0.05 | 0.0145 | 1.80 | 3.00 | 0.010 |

[Table 2]

| Wire No. | Overlay welding wire for first layer (% by weight) | | | | | | | | | | | | |
|---|---|---|---|---|---|---|---|---|---|---|---|---|---|
| | C | Si | Mn | P | S | Cu | Ni | Cr | Mo | V | Nb | Ti | Ni+Nb+Ti |
| 1 | 0.10 | 0.76 | 1.40 | 0.012 | 0.012 | 0.24 | 0.01 | 0.02 | <0.01 | - | - | - | 0.01 |
| 2 | 0.01 | 0.02 | 0.44 | 0.012 | 0.008 | - | - | - | - | - | - | - | - |
| 3 | 0.10 | 0.36 | 0.77 | 0.006 | 0.009 | 0.19 | 0.06 | 2.29 | 1.11 | 0.01 | - | 0.002 | 0.06 |
| 4 | 0.04 | 0.51 | 1.06 | 0.005 | 0.010 | 0.11 | 0.02 | 2.36 | 1.05 | - | - | - | 0.02 |
| 5 | 0.12 | 0.17 | 0.41 | 0.003 | 0.006 | 0.16 | 0.02 | 2.31 | 1.06 | 0.27 | 0.036 | - | 0.06 |
| 6 | 0.08 | 0.40 | 0.52 | 0.010 | 0.006 | 0.17 | 0.03 | 5.47 | 0.58 | - | - | - | 0.03 |

[Table 3]

| Wire No. | Overlay welding wire for overlaying (% by weight) | | | | | | | | | | | | |
|---|---|---|---|---|---|---|---|---|---|---|---|---|---|
| | C | Si | Mn | P | S | Cu | Ni | Cr | Mo | V | Nb | Ti | Ní+Nb+Ti |
| 3 | 0.10 | 0.36 | 0.77 | 0.006 | 0.009 | 0.19 | 0.06 | 2.29 | 1.11 | 0.01 | - | 0.002 | 0.06 |
| 7 | 0.12 | 0.17 | 0.41 | 0.003 | 0.006 | 0.16 | 0.02 | 2.31 | 1.06 | 0.27 | 0.04 | - | 0.06 |
| 8 | 0.12 | 0.53 | 1.86 | 0.003 | 0.002 | 0.16 | 0.19 | 1.45 | 0.56 | 0.01 | 0.01 | - | 0.20 |

[Table 4]

| Test material No. | Lamination | Number of layers | Wire No. | Temperature between preheating and path (aim) (°C) | Current (A) | Voltage (V) | Rate (mm/min) | Tungsten aim (mm) |
|---|---|---|---|---|---|---|---|---|
| TP-1 | first layer | 1 | 1 | 200 | 230 | 14 | 155 | lap 1.5 |
| TP-2 | | | | 220 | 220 | 14 | 155 | toe aim |
| TP-3 | | | | 280 | 250 | 14 | 155 | toe aim |

(continued)

| Test material No. | Lamination | Number of layers | Wire No. | Temperature between preheating and path (aim) (°C) | Current (A) | Voltage (V) | Rate (mm/min) | Tungsten aim (mm) |
|---|---|---|---|---|---|---|---|---|
| All | overlaying | until 20 mm | 8 | 200-300 | 240 | 14 | 155 | toe aim |
| | | Residual layer (10 mm) | 8 | 200-300 | 200-240 | 20-27 | 120-230 | - |

Then, in order to evaluate the stress relief annealing crack susceptibility with the Cr amount, a high-temperature low strain rate tensile test was conducted at a strain rate of $6.7 \times 10^{-6}$/s using Cr variation materials in which the Cr content was varied by changing welding conditions. A value of reduction in area (%) was used for the evaluation.

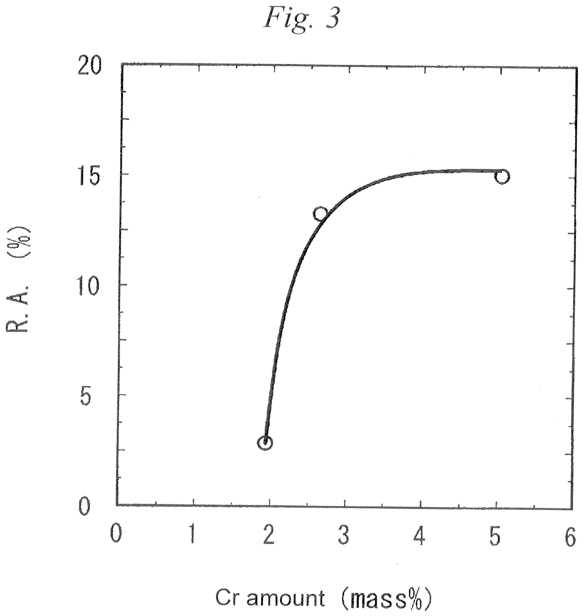

Table 5 shows results of check analysis of the first layer and Fig. 3 shows correlation between the Cr amount and the reduction in area obtained as a result of the high-temperature low strain rate tensile test. With an increase in the Cr amount of the first layer welding section, the reduction in area increases and the reduction in area was saturated at about 4.0% of the Cr amount. From the result, it was revealed that 4.0% or more is necessary as the Cr amount of the first layer welding section.

[Table 5]

| Wire No. | First layer No. | Upper layer No. | Results of check analysis (% by weight) | | | | | | | | | |
|---|---|---|---|---|---|---|---|---|---|---|---|---|
| | | | C | Si | Mn | P | S | Ni | Cr | Cu | Mo | V |
| TP-1 | | | 0.11 | 0.42 | 0.68 | 0.011 | 0.008 | 0.13 | 4.99 | 0.14 | 0.30 | 0.10 |
| TP-2 | 1 | 7 | 0.10 | 0.32 | 0.63 | 0.006 | 0.008 | 0.06 | 2.65 | 0.17 | 0.68 | 0.19 |
| TP-3 | | | 0.10 | 0.67 | 1.06 | 0.012 | 0.012 | 0.07 | 1.92 | 0.22 | 0.12 | 0.04 |

Next, Table 6 shows results of check analysis of the first layer welding section after overlay welding (the remainder being Fe and unavoidable impurities) and Table 7 shows results of check analysis of the upper layer welding section (the remainder being Fe and unavoidable impurities). Moreover, Table 8 shows weld combinations with which the high-temperature low strain rate tensile test was performed and test results thereof.

The check analysis and the high-temperature low strain rate tensile test were performed in the same manner as mentioned above.

From Table 6, Cr contained in the first layer welding sections according to the invention is from 4.0 to 7.7% by weight but the contents of Cr are small in the first layer wires Nos. 1, 2, and 5 and thus the contents fall out of the above range. Moreover, as compared with the range of the Si content contained in the first layer welding sections according to the invention, the content is small in the first layer wire No. 2 and, as compared with the range of the V content, the content is large in the first layer wire No. 5.

In Table 8, since the accumulation of strain into the first layer is thought to be a cause of generation of the stress relief annealing cracks, the case where a test piece was broken at the first layer and the reduction in area at break is 10% or less is shown as (x), the case where a test piece was broken at the first layer and the reduction in area at break is more than 10% and less than 30% is shown as (Δ), and the case where a test piece was broken at the upper layer and the reduction in area at break is 30% or more is shown as (○). As is apparent also from Table 8, with wires of Examples which satisfy the requirements of the invention, test pieces are broken at the upper layer welding metal or the reduction in area at break exceeds 10% even when they are broken at the first layer section, so that no accumulation of strain into the first layer is observed or a sufficient reduction in area at break is exhibited even when the accumulation of strain into the first layer is observed.

[Table 6]

| Wire No. | Results of check analysis of first layer welding section (% by weight) | | | | | | | | | | | | | |
|---|---|---|---|---|---|---|---|---|---|---|---|---|---|---|
| | C | Si | Mn | P | S | Cu | N | Cr | Mo | V | Nb | W | Co | B |
| 1 | 0.10 | 0.56 | 0.99 | 0.012 | 0.009 | 0.18 | 0.09 | 2.76 | 0.17 | 0.06 | 0.013 | 0.50 | 0.84 | 0.0023 |
| 2 | 0.05 | 0.04 | 0.36 | 0.005 | <0.003 | 0.14 | 0.09 | 3.42 | 0.21 | 0.07 | 0.020 | 0.62 | 1.04 | 0.0026 |
| 3 | 0.11 | 0.27 | 0.54 | 0.007 | 0.008 | 0.13 | 0.11 | 4.46 | 0.93 | 0.06 | 0.019 | 0.52 | 0.87 | 0.0022 |
| 4 | 0.05 | 0.40 | 0.79 | 0.006 | 0.008 | 0.09 | 0.09 | 4.27 | 0.94 | 0.05 | 0.020 | 0.46 | 0.76 | 0.0019 |
| 5 | 0.11 | 0.14 | 0.34 | 0.005 | 0.006 | 0.14 | 0.09 | 3.89 | 0.93 | 0.27 | 0.046 | 0.38 | 0.64 | 0.0017 |
| 6 | 0.09 | 0.32 | 0.38 | 0.007 | 0.006 | 0.15 | 0.08 | 6.53 | 0.57 | 0.05 | 0.015 | 0.41 | 0.71 | 0.0015 |

[Table 7]

| Wire No. | Results of check analysis of upper layer welding section (% by weight) | | | | | | | | | | | |
|---|---|---|---|---|---|---|---|---|---|---|---|---|
| | C | Si | Mn | P | S | Cu | Ni | Cr | Mo | V | Nb | Ti |
| 3 | 0.10 | 0.36 | 0.75 | 0.006 | 0.007 | 0.19 | 0.06 | 3.56 | 1.09 | 0.02 | <0.005 | 0.002 |
| 7 | 0.10 | 0.1 | 0.40 | 0.005 | 0.006 | 0.16 | 0.04 | 2.27 | 1.03 | 0.29 | 0.04 | - |
| 8 | 0.11 | 0.54 | 1.91 | 0.007 | 0.004 | 0.16 | 0.26 | 1.41 | 0.54 | <0.01 | <0.005 | - |

[Table 8]

| First layer wire No. | First layer of upperlayer wire No. | Second and subsequent layers of upper layer wire No. | Results of high-temperature low strain rate tensile test (reduction in area, %)*1 | Cr amount of second layer*2 (% by weight) | Pcr(2) value | Ferrite | V amount (% by weight) |
|---|---|---|---|---|---|---|---|
| 1 | 7 | 7 | × (4.9) | 2.42 | 1.45 | ○ (absence) | 0.27 |
| 2 | | | × (6.2) | 2.62 | 1.42 | ○ (absence) | 0.27 |
| 3 | | | Δ (14.4) | 2.93 | 1.37 | ○ (absence) | 0.27 |
| 4 | | | Δ (13.5) | 2.87 | 1.38 | ○ (absence) | 0.27 |
| 5 | | | ○ (48.5) | 2.76 | 1.40 | ○ (absence) | 0.27 |
| 1 | 8 | 8 | ○ (84.0) | 1.82 | 0.85 | ○ (absence) | 0.02 |
| 3 | | | ○ (82.4) | 2.33 | 0.77 | ○ (absence) | 0.02 |
| 4 | | | ○ (82.0) | 2.27 | 0.77 | ○ (absence) | 0.02 |
| 5 | | | ○ (83.1) | 2.15 | 0.79 | ○ (absence) | 0.10 |
| 6 | | | ○ (81.5) | 2.95 | 0.66 | Δ (minute) | 0.02 |

(continued)

| First layer wire No. | First layer of upperlayer wire No. | Second and subsequent layers of upper layer wire No. | Results of high-temperature low strain rate tensile test (reduction in area, %)*1 | Cr amount of second layer*2 (% by weight) | Pcr(2) value | Ferrite | V amount (% by weight) |
|---|---|---|---|---|---|---|---|
| 6 | 3 | 8 | ○ (83.4) | 3.56 | 1.27 | ○ (absence) | 0.02 |

*1 ○: reduction in area ≥ 30%, Δ: 30% > reduction in area > 10%, ×: reduction in area ≤ 10%
*2 in case where dilution amount from first layer is regarded as 30%
Pcr (2) value: calculation value of first layer of upper layer

In the case where the difference in the Cr amount contained is large as in the case of the first layer welding metal (first layer wire No. 6) and the upper layer welding metal (upper layer wire No. 8), Pcr (2) was 0.66 in the following expression and minute ferrite was formed at the boundary of the welding sections. Since ferrite induces a local decrease in strength and there is a possibility of concentration of strain during the stress relief annealing treatment. Therefore, it is preferable to prevent the ferrite formation, so that the Cr amount of each layer desirably satisfies a value larger than 0.7 in the expression shown below. Moreover, from the following expression (1), the precipitation of ferrite at the boundary between the base material and the first layer can be prevented when the Cr amount of the first layer welding section is 4.1% or more.

$$\text{Pcr (n)} = (\text{Cr amount in metal at n-th layer}) \times 0.65 - \{\text{Cr amount in metal at}$$

$$\text{(n-1)-th layer} - \text{Cr amount in metal at n-th layer}\} \times 0.35 > 0.7 \quad ... (1),$$

in which n = 0 represents the base material and n = 1 represents the first layer.

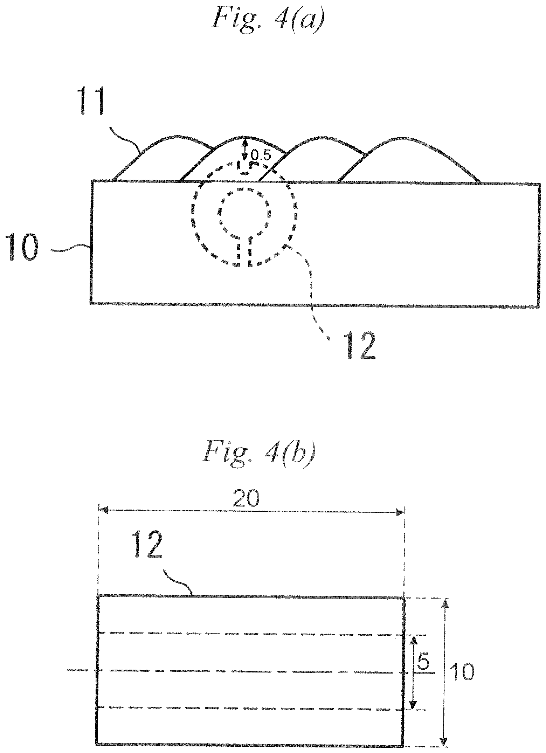

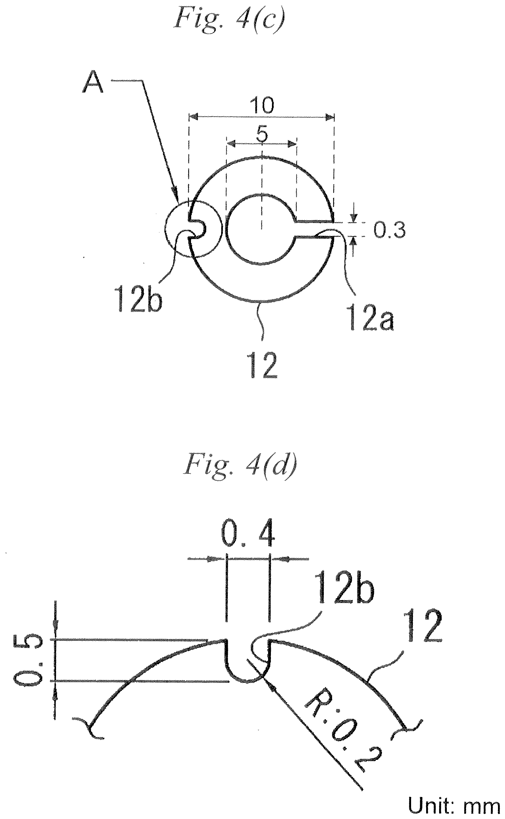

After welding was performed with a welding material for the first layer welding section where the welding material was selected from Table 2 based on the results in Table 8, a ring crack test was conducted, which is a test for evaluating the stress relief annealing crack susceptibility of the first layer welding section. Figs. 4 shows a shape of a ring crack test piece and a sampling position of the test piece.

In Fig. 4(a), 10 is a 12Cr rotor substrate, 11 is a first layer welding section, and 12 is a ring crack test piece.

Fig. 4(b) shows a side view of the ring crack test piece 12 and Fig. 4(c) shows a front view of the ring crack test piece 12. Fig. 4(d) is an enlarged view of the A part in Fig. 4(c).

The ring crack test piece 12 has a cylindrical shape having an inner diameter of 5 mm, an outer diameter of 10 mm, and a length of 20 mm and a slit 12a running through in a diameter direction and having a gap of 0.3 mm is formed along an axis direction in the side wall. Also, on the outer peripheral wall at the opposite side of the slit 12a, a U notch 12b having a width of 0.4 mm, a depth of 0.5 mm, and a bottom part whose cross-sectional shape is a curved shape having a curvature of 0.2 mm is formed along an axis direction.

In order to exclude the influence of the welding thermal cycle, after one layer is build up on the base material with an arbitrary welding material, the ring crack test piece 12 is sampled with adjustment so that the U notch comes to an unaffected zone, in a welded state without further treatment (Fig. 4(a)).

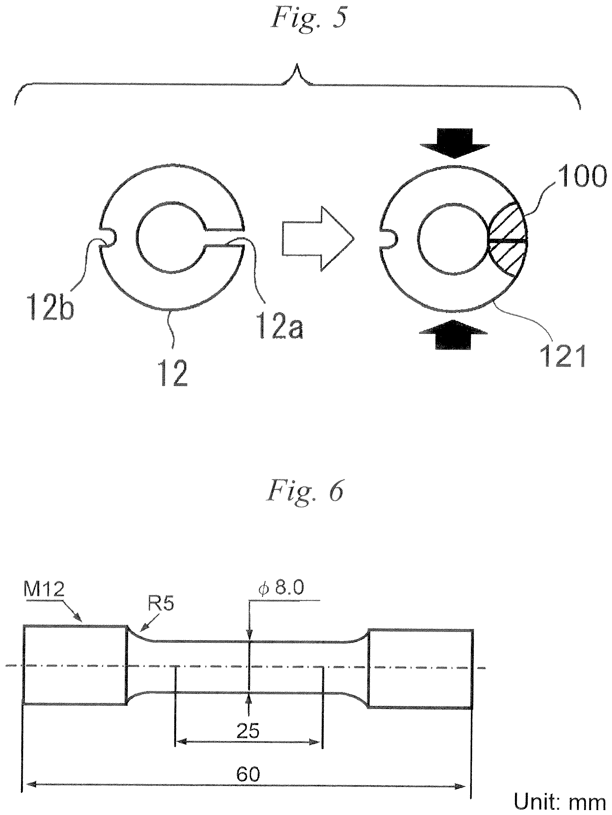

By imparting a force to the sampled test piece in arrowed directions as shown in Fig. 5, the slit 12a was caulked and gathered and then subjected to TIG welding and restrained, so that tensile residual stress was imparted to the bottom part of the U notch 12b.

After the restrained and welded ring crack test piece 121 was subjected to a stress relief annealing treatment at 630°C×10 hours, the presence of cracks was evaluated using two test pieces (N-1, N-2) by observing three cross-sections per one test piece, i.e., six cross-sections in total. Table 9 shows the results. Also, the Pcr(1) value was calculated based on the expression (1) and shown in Table 9.

The case where no crack is generated was shown as "○" and the case where crack(s) were generated was shown as "×".

Here, the compositions of elements constituting the wires Nos. 3, 4, and 6 fall within the range of the first layer welding section according to the invention and the wires Nos. 1 and 5 have compositions falling outside the range of the first layer welding section according to the invention.

From the results in Table 9, the stress relief annealing crack susceptibility varied depending on the Cr content and the stress relief annealing crack susceptibility decreased in the case of a high Cr material.

[Table 9]

| Wire No. | 0.3 mm slit | | | | | | Pcr(1) value |
| | N-1 | | | N-2 | | | |
| | Cross-section A | Cross-section B | Cross-section C | Cross-section A | Cross-section B | Cross-section C | |
|---|---|---|---|---|---|---|---|
| i | × | × | × | × | × | × | -0.63 |
| 3 | ○ | ○ | ○ | ○ | ○ | ○ | 1.06 |
| 4 | ○ | ○ | ○ | ○ | ○ | ○ | 0.88 |
| 5 | ○ | × | × | ○ | ○ | ○ | 0.49 |
| 6 | ○ | ○ | ○ | ○ | ○ | ○ | 3.13 |
| ○: no crack is generated, ×: crack(s) were generated | | | | | | | |

Table 10 shows results collecting the above Examples. In the over-all evaluation, it was evaluated so that the case where all the individual evaluation items were shown as "○" was marked "○○", the case where "Δ" was present was marked "○", and the case where "x" was present in any item was marked "×". The case where the over-all evaluation is marked "○○" can be judged to be sufficiently usable and the case where the over-all evaluation is marked "○" can be judged to be usable.

From the results, the welding sections and welding materials according to the invention exhibit low stress relief annealing crack susceptibility of the first layer and no accumulation of strain in the first layer was observed in the high-temperature low strain rate tensile test, so that breakage occurs at the upper layer welding metal. Furthermore, by considering Cr in the base material, the first layer, and the upper layer, the precipitation of ferrite can be also suppressed.

[Table 10]

| Symbol | | First layer welding wire No. | First layer of upper layer welding wire No. | Second and subsequent layers of upper layer welding wire No. | Result of high-temperature low strain rate tensile test | Result of ring crack test of first layer welding metal | Presence of ferrite | Over-all evaluation |
|---|---|---|---|---|---|---|---|---|
| Example | 1 | 3 | 8 | 8 | ○ | ○ | ○ | ○○ |
| | 2 | 4 | 8 | 8 | ○ | ○ | ○ | ○○ |
| | 3 | 6 | 8 | 8 | ○ | ○ | Δ | ○ |
| | 4 | 6 | 3 | 8 | ○ | ○ | ○ | ○○ |
| Comparative Example | 5 | 3 | 7 | 7 | Δ | ○ | ○ | ○ |
| | 6 | 4 | 7 | 7 | Δ | ○ | ○ | ○ |
| | 1 | 1 | 7 | 7 | × | × | ○ | × |
| | 2 | 2 | 7 | 7 | × | - | ○ | × |
| | 3 | 5 | 7 | 7 | ○ | × | ○ | × |
| | 4 | 1 | 8 | 8 | ○ | × | ○ | × |
| | 5 | 5 | 8 | 8 | ○ | × | ○ | × |

While the invention has been described in detail and with reference to specific embodiments thereof, it will be apparent to one skilled in the art that various changes and modifications can be made therein without departing from the scope as defined in the attached claims.

DESCRIPTION OF REFERENCE NUMERALS AND SIGNS

| | |
|---|---|
| 1: | High Cr steel turbine rotor |
| 2: | Journal part |
| 3: | Thrust part |
| 10: | 12Cr rotor substrate |
| 11: | First layer welding section |
| 12: | Ring crack test piece |
| 12a: | Slit |
| 12b: | U Notch |
| 13: | Upper layer welding section |
| 14: | Base material |
| 20: | Check analysis position |
| 100: | Restraint welding section (TIG welding/non-filler) |
| 121: | Restrained and welded ring crack test piece |

**Claims**

1. A multilayer overlay welding section of a high Cr steel turbine rotor comprising a first layer welding section and an upper layer welding section,
   wherein the first layer welding section is formed on a bearing contact surface of the high Cr steel turbine rotor, the first layer welding section consisting of, in terms of % by weight:

   C: 0.05 to 0.2%,
   Si: 0.1 to 1.0%,
   Mn: 0.3 to 1.5%,
   Cr: 4.0 to 7.7%, and
   Mo: 0.5 to 1.5%,

   with a remainder being Fe and unavoidable impurities, in which the unavoidable impurities contain P: 0.015% or less, S: 0.015% or less, Cu: 0.2% or less, V: 0.2% or less, Ni: 0.3% or less, Co: 1.5% or less, B: 0.005% or less, W: 1.5% or less, and Nb: 0.07% or less in terms of % by weight based on the first layer welding section;
   wherein the upper layer welding section is formed on the first layer welding section, the upper layer welding section consisting of, in terms of % by weight:

   C: 0.05 to 0.2%,
   Si: 0.1 to 1.0%,
   Mn: 0.3 to 2.5%,
   Cr: 1.0 to 4.0%, and
   Mo: 0.5 to 1.5%,

   with a remainder being Fe and unavoidable impurities, in which the unavoidable impurities contain P: 0.015% or less, S: 0.015% or less, Cu: 0.2% or less, V: 0.15% or less, Ni: 0.3% or less, and Nb: 0.07% or less in terms of % by weight based on the upper layer welding section;
   **characterised in that** an amount of V contained in the upper layer welding section is smaller than an amount of V contained In the first layer welding section; and
   wherein the high Cr steel turbine rotor is constituted by a high Cr steel consisting of:

   C: 0.05 to 0.25%,
   Si: 1.0% or less,
   Mn: 1.5% or less,

Ni: 1.0% or less,
Cr: 8 to 13%,
Mo: 2.0% or less,
V: 0.05 to 0.4%,
Nb: 0.01 to 0.1%,
N: 0.01 to 0.05%,
W: 0.05 to 5.0%,
Co: 0.05 to 5%, and
B: 0.015% or less,

with a remainder being Fe and unavoidable impurities.

2. The multilayer overlay welding section of claim 1, wherein the first layer welding section satisfies an expression (1):

$$2 \lceil Pcr \rfloor 2$$

Pcr (1) = (a Cr amount in the first layer welding section) x 0.65 - (a Cr amount of the high Cr steel turbine rotor - the Cr amount in the first layer welding section) x 0.35 > 0.7 ... (1).

3. The multilayer overlay welding section of claim 1 or 2, wherein the upper layer welding section satisfies an expression (2):

$$2 \lceil Pcr \rfloor 2$$

Pcr (n) = (a Cr amount in the upper layer welding section at n-th layer) x 0.65 - {a Cr amount in the upper layer welding section at (n-1)-th layer - the Cr amount in the upper layer welding section at the n-th layer} x 0.35 > 0.7... (2),

in which when N represents the number of layers constituting the multilayer overlay welding section, $2 \leq n \leq N$.

4. A process for producing the multilayer overlay welding section of a high Cr steel turbine rotor of any of claims 1 to 3, the process comprising:

forming a first layer welding section on the bearing contact surface of the high Cr steel turbine rotor by welding using an overlay welding material for the first layer welding section consisting of, in terms of % by weight:

C: 0.03 to 0.2%,
Si: 0.1 to 1.0%,
Mn: 0.3 to 1.2%,
Cr: 2.0 to 5.5%, and
Mo: 0.1 to 1.5%,

with a remainder being Fe and unavoidable impurities, in which the unavoidable impurities contain P: 0.015% or less, S: 0.015% or less, Cu: 0.2% or less, and V: 0.1 % or less, and a sum of one or more kinds selected from the group consisting of Ni, Nb and Ti is 0.2% or less in terms of % by weight based on the overlay welding material for the first layer welding section, and
forming an upper layer welding section on an upper layer of the thus-formed first layer welding section by welding using an overlay welding material for the upper layer welding section consisting of, in terms of % by weight:

C: 0.03 to 0.2%,
Si: 0.1 to 1.0%,
Mn: 0.3 to 3.0%,
Cr: 1.0 to 2.5%, and

Mo: 0.1 to 1.5%,

with a remainder being Fe and unavoidable impurities, in which the unavoidable impurities contain P: 0.015% or less, S: 0.015% or less, Cu: 0.2% or less, and V: 0.1 % or less, and a sum of one or more kinds selected from the group consisting of Ni, Nb and Ti is 0.2% or less in terms of % by weight based on the overlay welding material for the upper layer welding section;
**characterised in that** an amount of V contained in the formed upper layer welding section is smaller than an amount of V contained in the first layer welding section; and

wherein the high Cr steel turbine rotor is constituted by a high Cr steel consisting of:

C: 0.05 to 0.25%,
Si: 1.0% or less,
Mn: 1.5% or less,
Ni: 1.0% or less,
Cr: 8 to 13%,
Mo: 2.0% or less,
V: 0.05 to 0.4%,
Nb: 0.01 to 0.1%,
N: 0.01 to 0.05%,
W: 0.05 to 5.0%,
Co: 0.05 to 5%, and
B: 0.015% or less,

with a remainder being Fe and unavoidable impurities.

**Patentansprüche**

1. Mehrschichtiger Auftragsschweißabschnitt eines Stahlturbinenrotors mit hohem Cr-Anteil mit einem ersten Schichtschweißabschnitt und einem oberen Schichtschweißabschnitt,
wobei der erste Schichtschweißabschnitt auf einer tragenden Kontaktfläche des Stahlturbinenrotors mit hohem Cr-Anteil ausgebildet ist, wobei der erste Schichtschweißabschnitt in Gewichtsprozent besteht aus:

C: 0,05 bis 0,2 %,
Si: 0,1 bis 1,0 %,
Mn: 0,3 bis 1,5%,
Cr: 4,0 bis 7,7 %, und
Mo: 0,5 bis 1,5%,

wobei der Rest Fe und unvermeidbare Verunreinigungen ist, wobei die unvermeidbaren Verunreinigungen enthalten P: 0,015 % oder weniger, S: 0,015 % oder weniger, Cu: 0,2 % oder weniger, V: 0,2 % oder weniger, Ni: 0,3 % oder weniger, Co: 1,5 % oder weniger, B: 0,005 % oder weniger, W: 1,5 % oder weniger und Nb: 0,07 % oder weniger ausgedrückt in Gewichtsprozent auf der Grundlage des ersten Schichtschweißabschnitts;
wobei der obere Schichtschweißabschnitt auf dem ersten Schichtschweißabschnitt ausgebildet ist, und der obere Schichtschweißabschnitt ausgedrückt in Gewichtsprozent besteht aus:

C: 0,05 bis 0,2 %,
Si: 0,1 bis 1,0 %,
Mn: 0,3 bis 2,5 %,
Cr: 1,0 bis 4,0 %, und
Mo: 0,5 bis 1,5%,

wobei der Rest Fe und unvermeidbare Verunreinigungen ist, wobei die unvermeidbaren Verunreinigungen enthalten P: 0,015 % oder weniger, S: 0,015 % oder weniger, Cu: 0,2 % oder weniger, V: 0,15 % oder weniger, Ni: 0,3 % oder weniger und Nb: 0,07 % oder weniger ausgedrückt in Gewichtsprozent auf der Grundlage des oberen Schichtschweißabschnitts;
**dadurch gekennzeichnet, dass**

ein Anteil an V, der in dem oberen Schichtschweißabschnitt enthalten ist, kleiner ist als ein Anteil an V, der in dem ersten Schichtschweißabschnitt enthalten ist; und
wobei der Stahlturbinenrotor mit hohem Cr-Anteil aus Stahl mit hohem Cr-Anteil aufgebaut ist, der besteht aus:

C: 0,05 bis 0,25 %,
Si: 1,0 % oder weniger,
Mn: 1,5 % oder weniger,
Ni: 1,0 % oder weniger,
Cr: 8 bis 13 %,
Mo: 2,0 % oder weniger,
V: 0,05 bis 0,4 %,
Nb: 0,01 bis 0,1 %,
N: 0,01 bis 0,05 %,
W: 0,05 bis 5,0 %,
Co: 0,05 bis 5 %, und
B: 0,015 % oder weniger,

wobei der Rest Fe und unvermeidbare Verunreinigungen ist.

2. Mehrschichtiger Auftragsschweißabschnitt nach Anspruch 1, wobei der erste Schichtschweißabschnitt einem Ausdruck (1) genügt:

Pcr (1) = (ein Cr-Anteil in dem ersten Schichtschweißabschnitt) x 0,65 - (einem Cr-Anteil des Stahlturbinenrotors mit hohem Cr-Anteil - dem Cr-Anteil in dem ersten Schichtschweißabschnitt) x 0,35 > 0,7 … (1).

3. Mehrschichtiger Auftragsschweißabschnitt nach Anspruch 1 oder 2, wobei der obere Schichtschweißabschnitt einem Ausdruck (2) genügt:

Pcr (n) = (ein Cr-Anteil in dem oberen Schichtschweißabschnitt an der n-ten Schicht) x 0,65 - {einem Cr-Anteil in dem oberen Schichtschweißabschnitt an der (n - 1)-ten Schicht - dem Cr-Anteil in dem oberen Schichtschweißabschnitt an der n-ten Schicht} x 0,35 > 0,7 … (2),

wobei gilt, wenn N die Anzahl an Schichten repräsentiert, die den mehrschichtigen Überlagerungsschweißabschnitt bilden, $2 \leq n \leq N$.

4. Prozess zur Herstellung des mehrschichtigen Auftragsschweißabschnitts eines Stahlturbinenrotors mit hohem Cr-Anteil nach einem der Ansprüche 1 bis 3, wobei der Prozess umfasst:

Herstellen eines ersten Schichtschweißabschnitts auf der tragenden Kontaktfläche des Stahlturbinenrotors mit hohem Cr-Anteil durch Schweißen unter Anwendung eines Auftragsschweißmaterials für den ersten Schichtschweißabschnitt, der ausgedrückt in Gewichtsprozent besteht aus:

C: 0,03 bis 0,2 %,
Si: 0,1 bis 1,0 %,
Mn: 0,3 bis 1,2 %,
Cr: 2,0 bis 5,5 %, und
Mo: 0,1 bis 1,5%,

wobei ein Rest Fe und unvermeidbare Verunreinigungen ist, wobei die unvermeidbaren Verunreinigungen enthalten P: 0,015 % oder weniger, S: 0,015 % oder weniger, Cu: 0,2 % oder weniger und V: 0,1 % oder weniger, und wobei eine Summe aus einer oder mehrerer Arten, die ausgewählt sind aus der Gruppe bestehend aus Ni, Nb und Ti ausgedrückt in Gewichtsprozent auf der Grundlage des Auftragsschweißmaterials für den ersten Schichtschweißabschnitt 0,2 % oder weniger ist, und

Herstellen eines oberen Schichtschweißabschnitts auf einer oberen Schicht des auf diese Weise hergestellten ersten Schichtschweißabschnitts durch Schweißen unter Verwendung eines Auftragsschweißmaterials für den oberen Schichtschweißabschnitt, der ausgedrückt in Gewichtsprozent besteht aus:

C: 0,03 bis 0,2 %,
Si: 0,1 bis 1,0 %,
Mn: 0,3 bis 3,0 %,
Cr: 1,0 bis 2,5 %, und
Mo: 0,1 bis 1,5%,

wobei ein Rest Fe und unvermeidbare Verunreinigungen ist, wobei die unvermeidbaren Verunreinigungen enthalten P: 0,015 % oder weniger, S: 0,015 % oder weniger, Cu: 0,2 % oder weniger und V: 0,1 % oder weniger, und wobei die Summe aus einer oder mehreren Arten, die ausgewählt sind aus der Gruppe bestehend aus Ni, Nb und Ti ausgedrückt in Gewichtsprozent auf der Grundlage des Auftragsschweißmaterials für den oberen Schichtschweißabschnitt 0,2 % oder weniger ist;
**dadurch gekennzeichnet, dass**
ein Anteil an V, der in dem hergestellten oberen Schichtschweißabschnitt enthalten ist, kleiner ist als ein Anteil an V, der in dem ersten Schichtschweißabschnitt enthalten ist; und
wobei der Stahlturbinenrotor mit hohem Cr-Anteil aus Stahl mit hohem Cr-Anteil aufgebaut ist, der besteht aus:

C: 0,05 bis 0,25 %,
Si: 1,0 % oder weniger,
Mn: 1,5 % oder weniger,
Ni: 1,0 % oder weniger,
Cr: 8 bis 13 %,
Mo: 2,0 % oder weniger,
V: 0,05 bis 0,4 %,
Nb: 0,01 bis 0,1 %,
N: 0,01 bis 0,05 %,
W: 0,05 bis 5,0 %,
Co: 0,05 bis 5 %, und
B: 0,015 % oder weniger,

wobei ein Rest Fe und unvermeidbare Verunreinigungen ist.

## Revendications

1. Section de soudage multicouche de recouvrement de rotor de turbine en acier à haute teneur en chrome (Cr) comprenant une section de soudage de première couche et une section de soudage de couche supérieure, dans laquelle la section de soudage de première couche est formée sur une surface de contact de palier du rotor de turbine en acier à haute teneur en chrome (Cr), la section de soudage de première couche consistant en, en termes de % en poids:

C: 0,05 % à 0,2 %,
Si: 0,1 % à 1,0 %,
Mn: 0,3 % à 1,5 %,
Cr: 4,0 % à 7,7 %, et
Mo: 0,5 % à 1,5 %,

le reste étant du fer (Fe) et des impuretés inévitables, dans laquelle les impuretés inévitables contiennent: P: 0,015 %, ou moins, S: 0,015 %, ou moins, Cu: 0,2 %, ou moins, V: 0,2 %, ou moins, Ni: 0,3 %, ou moins, Co: 1,5%, ou moins, B: 0,005 %, ou moins, W: 1,5 %, ou moins, et Nb: 0,07 %, ou moins en termes de % en poids sur la base de la section de soudage de première couche;
dans laquelle la section de soudage de couche supérieure est formée sur la section de soudage de première couche, la section de soudage de couche supérieure consistant en, en termes de % en poids:

C: 0,05 % à 0,2 %,

Si: 0,1 % à 1,0 %,
Mn: 0,3 % à 2,5 %,
Cr: 1,0 % à 4,0 %, et
Mo: 0,5 % à 1,5 %,

le reste étant du fer (Fe) et des impuretés inévitables, dans laquelle les impuretés inévitables contiennent: P: 0,015 %, ou moins, S: 0,015 %, ou moins, Cu: 0,2 %, ou moins, V: 0,15 %, ou moins, Ni: 0,3 %, et Nb: 0,07 %, ou moins en termes de % en poids sur la base de la section de soudage de couche supérieure;
**caractérisée en ce que**:

une quantité de V contenue dans la section de soudage de couche supérieure est inférieure à une quantité de V contenue dans la section de soudage de première couche; et
dans laquelle le rotor de turbine en acier à haute teneur en chrome (Cr) est constitué d'un acier à haute teneur en chrome (Cr) consistant en:

C: 0,05 % à 0,25 %,
Si: 1,0 %, ou moins,
Mn: 1,5%, ou moins,
Ni: 1,0 %, ou moins,
Cr: 8%à13%,
Mo: 2,0, ou moins,
V: 0,05 % à 0,4 %,
Nb: 0,01 % à 0,1 %,
N: 0,01 % à 0,05 %,
W: 0,05 % à 5,0 %,
Co: 0,05 % à 5 %, et
B: 0,015 %, ou moins,

le reste étant du fer (Fe) et des impuretés inévitables.

2. Section de soudage multicouche de recouvrement selon la revendication 1, dans laquelle la section de soudage de première couche satisfait une expression (1):

Pcr(1) = (une quantité de Cr dans la section de soudage de première couche) x 0,65 - (une quantité de Cr du rotor de turbine en acier à haute teneur en chrome (Cr) - la quantité de Cr dans la section de soudage de première couche) x 0,35 > 0,7 … (1).

3. Section de soudage multicouche de recouvrement selon la revendication 1 ou 2, dans laquelle la section de soudage de couche supérieure satisfait une expression (2):

$Pcr(n)$ = (une quantité de Cr dans la section de soudage de couche supérieure à la $n^{\text{ième}}$ couche) x 0,65 - {une quantité de Cr dans la section de soudage de couche supérieure à la $(n-1)^{\text{ième}}$ couche - la quantité de Cr dans la section de soudage de couche supérieure à la $n^{\text{ième}}$ couche} x 0,35 > 0,7 … (2),

dans laquelle N représente le nombre de couches qui constituent la section de soudage multicouche de recouvrement, $2 \leq n \leq N$.

4. Procédé de production de la Section de soudage multicouche de recouvrement de rotor de turbine en acier à haute teneur en chrome (Cr) selon l'une quelconque des revendications 1 à 3, le procédé comprenant les étapes suivantes:

former une section de soudage de première couche sur la surface de contact de palier du rotor de turbine en acier à haute teneur en chrome (Cr) par soudage en utilisant un matériau de soudage de recouvrement pour la section de soudage de première couche consistant en, en termes de % en poids:

C: 0,03 % à 0,2 %,
Si: 0,1 % à 1,0 %,
Mn: 0,3 % à 1,2 %,
Cr: 2,0 % à 5,5 %, et
Mo: 0,1 % à 1,5 %,

le reste étant du fer (Fe) et des impuretés inévitables, dans lequel les impuretés inévitables contiennent: P: 0,015 %, ou moins, S: 0,015 %, ou moins, Cu: 0,2 %, ou moins, et V: 0,1 %, ou moins, et une somme d'un ou de plusieurs élément(s) sélectionné(s) dans le groupe comprenant le Ni, le Nb et le Ti est égale à 0,2 %, ou moins, en termes de % en poids, sur la base du matériau de soudage de recouvrement pour la section de soudage de première couche; et

former une section de soudage de couche supérieure sur une couche supérieure de la section de soudage de première couche ainsi formée par soudage en utilisant un matériau de soudage de recouvrement pour la section de soudage de couche supérieure consistant en, en termes de % en poids:

C: 0,03 % à 0,2 %,
Si: 0,1 % à 1,0 %,
Mn: 0,3 % à 3,0 %,
Cr: 1,0 % à 2,5 %, et
Mo: 0,1 % à 1,5 %,

le reste étant du fer (Fe) et des impuretés inévitables, dans lequel les impuretés inévitables contiennent: P: 0,015 %, ou moins, S: 0,015 %, ou moins, Cu: 0,2 %, ou moins, et V: 0,1 %, ou moins, et une somme d'un ou de plusieurs élément(s) sélectionné(s) dans le groupe comprenant le Ni, le Nb et le Ti est égale à 0,2 %, ou moins, en termes de % en poids, sur la base du matériau de soudage de recouvrement pour la section de soudage de couche supérieure;

**caractérisé en ce que**:

une quantité de V contenue dans la section de soudage de couche supérieure est inférieure à une quantité de V contenue dans la section de soudage de première couche; et

dans lequel le rotor de turbine en acier à haute teneur en chrome (Cr) est constitué d'un acier à haute teneur en chrome (Cr) consistant en:

C: 0,05 % à 0,25 %,
Si: 1,0 %, ou moins,
Mn: 1,5 %, ou moins,
Ni: 1,0 %, ou moins,
Cr: 8 % à 13 %,
Mo: 2,0, ou moins,
V: 0,05 % à 0,4 %,
Nb: 0,01 % à 0,1 %,
N: 0,01 % à 0,05 %,
W: 0,05 % à 5,0 %,
Co: 0,05 % à 5 %, et
B: 0,015 %, ou moins,

le reste étant du fer (Fe) et des impuretés inévitables.

*Fig. 1*

2

3

1

*Fig. 2*

13

20

11

14

α

*Fig. 3*

*Fig. 4(a)*

*Fig. 4(b)*

Fig. 4(c)

Fig. 4(d)

Unit: mm

*Fig. 5*

*Fig. 6*

Unit: mm

**EP 2 745 979 B1**

**REFERENCES CITED IN THE DESCRIPTION**

**Patent documents cited in the description**

- JP 57137456 A
- JP 6272503 A
- JP 9076091 A
- JP 9066388 A
- US 4504554 A
- US 5749228 A
- JP 6047186 B